# EUROPEAN PATENT APPLICATION

(11) **EP 3 863 310 A1**
(43) Date of publication of application: **11.08.2021**
(21) Application number: 20155346.8
(22) Date of filing: 04.02.2020
(51) Int. Cl.: H04W 4/021, H04W 64/00

(54) **CHECKING DESIRED TRIGGERING CONFIDENCE OF GEO-FENCE**

(71) Applicant: HERE Global B.V., 5611 ZT Eindhoven (NL)
(72) Inventor: WIROLA, Lauri, 33100 Tampere (FI); RAUHALA, Petri, 33100 Tampere (FI); LUOMI, Marko, 33100 Tampere (FI)
(74) Representative: Cohausz & Florack

(57) **Abstract**

The invention inter alia relates to a method, performed by at least a first apparatus (110, 120, 130, 400, 600, 700), the method comprising obtaining (201) geo-fence information at least partially defining a desired geo-fence; obtaining (202) confidence information indicating a desired confidence for triggering the desired geo-fence; obtaining (205) an indication of an incompatibility, if the desired geo-fence and the desired confidence are incompatible; and performing or causing performing (206) a countermeasure in order to resolve the incompatibility.

## Description

### FIELD OF THE DISCLOSURE

The invention relates to the field of geo-fences and the use thereof and in particular to the process of setting up and evaluating or triggering geo-fences.

### BACKGROUND

The number of devices with location capabilities is expected to grow exponentially in the next decade or so. This growth is the result of the Internet-of-Things -era (IoT), in which more and more devices get connected to the Internet. Soon homes, factories, cities and transportation means will be equipped with low-cost sensors that produce real-time information on various characteristics and environment variables. Moreover, the cheaper electronics enables factories and industries to equip assets and supply chains with trackers that provide real-time information on the flow of goods.

The basic ingredient of the IoT story is that the sensors and trackers are location-aware. The location-awareness can be achieved through two means: either the device has its own positioning capabilities (like GNSS or cellular/wifi/Bluetooth offline positioning) or the device makes measurements of the radio environment (cellular/wifi/Bluetooth) and sends them to the cloud for position determination or performs positioning based on a radio map locally stored at the device, wherein said positioning may be an offline positioning. A radiomap is a map that relates identification, signal strength or any other parameter of radio access point like cellular base station, wi-fi access point or distribution of such a parameter to a real word location e.g. latitude, longitude and altitude.

When it comes to small devices that must function autonomously for extended periods of time, power consumption is of special concern. The devices are powered by batteries and, thus, any means to reduce current drain are welcome. As far as location technologies are concerned, there are few ways to reduce power consumption. The greatest power saving results from using the correct technology at the correct time. To exemplify, when low location accuracy is adequate, it is advantageous to use cellular positioning, because it is cheap in terms of energy.

Location is important not only for simple tracking use cases, but also for event notifications. Specifically, when events are tied to geographical constraints, one talks about geo-fences. A geo-fence may, for example, be a circular area or a polygon. When the device enters (or leaves) the defined area, an observer may get notified about the event. While geo-fences are powerful tools, they may also consume a lot of power. Thus, also in such use cases the correct choice of technology is of essence.

### SUMMARY OF SOME EXEMPLARY EMBODIMENTS

The modern positioning and tracking systems effectively utilize not only a single positioning method or technology, but usually various positioning technologies available for the respective application or use case, including GNSS, cellular networks and Wi-Fi networks as examples of typical outdoor positioning methods. Utilized indoor positioning technologies also include Wi-Fi networks, but also Bluetooth systems and UWB system. The same technologies are also used for evaluating or triggering geo-fences.

When the position estimate is considered to be a point-like estimation, the triggering of a geo-fence can be handled quite easily, as the position estimate is either inside or outside the geo-fence, similar to a binary state. However, a position estimate is typically associated with a position uncertainty in particular depending on the technology used. The position estimate uncertainty, however, affects the geo-fence evaluation. More specifically, this position uncertainty, in turn, results in that the triggering of a geo-fence can only be assessed to have taken place with a certain probability or confidence.

This may lead to situations where a geo-fence is set up and the parameters of the geo-fence in combination with the positioning conditions at the location of the geo-fence may be such that the geo-fence is never or hardly ever triggered. In the other extreme case, there may be a situation where the geo-fence may be set up such that the geo-fence is so easily triggered, that the idea of the geo-fence becomes useless.

Thus, the present invention may allow for providing an improved set-up or generation of geo-fences. In particular, it may be an object of the present invention to avoid the generation of geo-fences which do not behave as desired, such as geo-fences which are impossible to trigger.

According to an exemplary aspect of the present invention, a method performed by at least a first apparatus is described, the method comprising:
- obtaining geo-fence information at least partially defining a desired geo-fence;
- obtaining confidence information indicating a desired confidence for triggering the desired geo-fence;
- obtaining an indication of an incompatibility, if the desired geo-fence and the desired confidence are incompatible; and
- performing or causing performing a countermeasure in order to resolve the incompatibility.

This method may for instance be performed and/or controlled by an apparatus, for instance by a client (e.g. a mobile device) or a server. Alternatively, this method may be performed and/or controlled by more than one apparatus, for instance a client (e.g. a mobile device) and a server or a server cloud comprising at least two servers.

In one example the above method according to the exemplary aspect of the invention may completely or at least partially be performed and/or controlled by an electronic device such as an Internet-of-Things (IoT) device, a tracker, or a low capability device. The electronic device may in particular be a battery-powered device. The electronic device may in particular be a battery-powered device with location awareness. For instance, the method may be performed and/or controlled by using at least one processor of the electronic device.

According to a further exemplary aspect of the invention, a computer program is disclosed, the computer program when executed by a processor causing an apparatus to perform and/or control the actions of the method according to the exemplary aspect of the present invention.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc.

According to a further exemplary aspect of the invention, an apparatus (e.g. the first apparatus) is disclosed, configured to perform and/or control or comprising respective means for performing and/or controlling the method according to the exemplary aspect of the present invention.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus at least to perform and/or to control the method according to the exemplary aspect of the present invention.

The above-disclosed apparatus according to an exemplary aspect of the invention may be a module or a component for a device, for example a chip. Alternatively, the disclosed apparatus according to any aspect of the invention may be a device, for instance a gateway device. The disclosed apparatus according to any aspect of the invention may comprise only the disclosed components, for instance means, processor, memory, or may further comprise one or more additional components.

According to a further exemplary aspect of the invention, a system comprising multiple apparatuses, wherein said apparatuses are configured to cooperate for performing the method according to the exemplary aspect of the invention or one of said apparatuses is configured for performing the method according to the exemplary aspect of the invention alone.

In the following, exemplary features and exemplary embodiments of all aspects of the present invention will be described in further detail.

The exemplary method comprises obtaining geo-fence information at least partially defining a desired geo-fence. A geo-fence may be considered to be a virtual perimeter for a real-world geographic space, area or line. Accordingly, a geo-fence may be a one-, two-, or three-dimensional object. For instance, a geo-fence may be set around an area-of-interest or, if the geo-fence is of the type line, the geo-fence may define a kind of border, e.g. a country border or any other well-suited border. As an example, a geo-fence may be defined by a point and a geometric shape around the point, e.g. a circle or an ellipse around the point. As another example, a geo-fence may be defined by a polygon, wherein a polygon may be defined by a predefined set of points (e.g. corners) and/or lines (e.g. edges). Thus, as an example, the area of a geo-fence and/or the shape of a geo-fence may be defined by an (e.g. straight) line, a curve, an (open or closed) polygon, a rectangle, a square, an ellipse, a circle, an ellipsoid and/or a sphere. It may also be possible to combine such objects of the same or different category for defining a geo-fence of a more complex shape.

A geo-fence may be considered to define an area-of-interest at and/or around a specific location. As an illustrative example, a geo-fence could be a check point, area or space on the delivery route of a vehicle, e.g. a truck (or any movable mobile device), and somebody could be interested to know and get a notification when the delivery vehicle visits the check point (or check area), which could for example be one of the delivery locations (areas). Of course, a geo-fence could be used for any other well-suited area-of-interest, e.g. a school attendance zone, a neighborhood or any other zone. The geo-fence may also define a border such that it could be checked whether something or somebody (i.e. an asset such as a vehicle or truck or any movable mobile device, which may be location-aware) moves over the border being defined by the geo-fence. For instance, the border may be a border of an area and thus it can be checked whether an asset has moved over the country border.

Accordingly, geo-fence information may be considered any information partially or completely defining such a geo-fence. As a simple example, the geo-fence information may comprise coordinates of a geographic point on the surface of the earth and a radius in order to define a circular geo-fence.

A desired geo-fence is considered to be a geo-fence which may be desired by a program or an operator, for instance, as explained in more details further below. The geo-fence information indicating such a desired geo-fence may be desired or needed for the purpose of setting up the geo-fence for geo-fencing purposes.

The exemplary method further comprises obtaining confidence information indicating a desired confidence for triggering the desired geo-fence. As already explained, a position estimate obtained by means of a certain positioning technology is usually not considered to be a pure point-like estimation, but the position estimate is typically associated with a position uncertainty in particular depending on the situation and technology used. Specifically, the position estimate uncertainty, however, affects the evaluation whether a geo-fence is triggered, because the position uncertainty results in that the triggering of a geo-fence can only be assessed to have taken place with a certain confidence.

With the confidence information indicating a desired confidence for triggering the desired geo-fence, a confidence can be defined or set, so that the geo-fence is only considered triggered if this can be determined with at least this confidence. In other words, the desired confidence may in particular define a minimum confidence value or level needed for considering a triggering of the geo-fence. The confidence value or level may thus correspond to a probability or likelihood of a determined position being inside of the geo-fence. The confidence or confidence information may thus also be considered as a "triggering confidence" or "triggering confidence information".

Generally, triggering a geo-fence may be understood to mean that the position of one or more assets fulfills one or more predefined requirements with respect to the defined geo-fence. For this, the position of the asset(s) may be estimated and monitored (e.g. the geographical position of a mobile device), in particular repeatedly. As non-limiting examples, the predefined requirement (which may be repeatedly checked for) may be whether the asset(s) have entered the geo-fence, have left the geo-fence, have crossed a border of the geo-fence, are inside the geo-fence, are outside the geo-fence or have remained inside or outside the geo-fence. The present invention, however, in particular focuses on the question whether it can be determined with sufficient confidence, that a position is inside or has remained inside a geo-fence, since particularly the determination thereof can be problematic when relying on positions having a considerable positioning uncertainty compared to the size of the area of the geo-fence. Thus, the exemplary method may in particular comprise checking whether (and in particular determining that) the position of an asset is (still) inside the geo-fence.

In case a geo-fence is determined to be triggered (i.e. determined to be triggered with the desired confidence), different actions may be caused or provoked, which may in particular depend on the use case or purpose of the specific geo-fence. For instance, an output may be provided indicating the triggering of the geo-fence. This output may be a user output directed at a user of a device. The output may be provided via a user interface. The output may be provided to the user, who may have set up the geo-fence, for instance. The output may be a visual, acoustic and/or haptic output. For instance, the user may receive a notification or pop-up message indicating that the geo-fence has been triggered. Alternatively or additionally, the output may be directed at another device or another application or part thereof (e.g. over a programming interface). Other actions may also be caused or proved in case of a triggering of a geo-fence. It is also possible that no action is taken or that an action is only taken if a further condition is met. In the example already mentioned above, the geo-fence could for instance be a check-point on a delivery route of a delivery vehicle, wherein the asset is the vehicle or something on the vehicle, so that a user is informed bay a message about the arrival of the delivery vehicle at the check-point when the vehicle triggers the geo-fence (e.g. when it is determined that the delivery vehicle has entered the check point with the desired confidence). However, many other use cases are possible, such as child location services (e.g. notifying of parents if a child leaves a designated area), telematics (e.g. triggering a warning when an equipped vehicle or person enters, leaves or crosses a defined zone around e.g. places of work, customer's sites or secure areas), protection of assets against stealing or control of unmanned aerial vehicles (e.g. preventing a device from flying into protected airspace), just to name a few non-limiting examples.

The desired confidence is considered to be a confidence which may be desired by a program or an operator, for instance, as further explained below. The confidence information indicating such a desired confidence may be desired or needed for the purpose of setting up a geo-fence for geo-fencing purposes. The confidence information on a desired confidence may also be referred to as "desired confidence information". The confidence information may also be understood as being a part of the geo-fence information defining the particular geo-fence.

The exemplary method further comprises obtaining an indication of an incompatibility, if the desired geo-fence and the desired confidence are incompatible. An indication of an incompatibility may for instance be obtained by determining the incompatibility by the at least first apparatus or another apparatus. The exemplary method may further comprise providing the indication of the determined incompatibility from one apparatus to another apparatus. Accordingly, the indication of an incompatibility may be based on a result of a checking whether there is an incompatibility between the desired geo-fence and the desired confidence. An incompatibility between the desired geo-fence and the desired confidence may in particular be understood to mean that the desired geo-fence cannot or can likely not be triggered with the desired confidence, as will be explained in more detail below.

The exemplary method further comprises performing (or causing performing) a countermeasure in order to resolve the incompatibility. A countermeasure may for instance comprise providing an output (e.g. to the operator) indicating the determined incompatibility, so that an operator can take care of the incompatibility and potentially change the desired geo-fence or the desired confidence, as will be described in more detail below. In case no incompatibility is determined, i.e. it is determined that the desired geo-fence and the desired confidence are compatible, it will generally not be required to perform a respective countermeasure.

The exemplary method may in particular be understood to be part of or to be a method of setting up a geo-fence, e.g. by an operator responsible for setting up geo-fences.

As a result, an improved set-up or generation of geo-fences can be realized. In particular, the generation of geo-fences which do not behave as desired, such as geo-fences which are unlikely or impossible to trigger, can be effectively avoided.

According to an exemplary embodiment of all aspects of the invention, the geo-fence information at least partially defining the desired geo-fence comprises information on or indicative of one or more of:
- a geographic location of the desired geo-fence;
- a radius of the desired geo-fence;
- one or more line segments of the desired geo-fence;
- one or more points of the desired geo-fence;
- an area covered by the desired geo-fence; and/or
- a boundary of the desired geo-fence.

The geo-fence information may primarily depend on the type or shape of the geo-fence. A geographic location of the desired geo-fence may be a center point, focus point or center of mass of the geo-fence, for instance. A radius of the desired geo-fence may define the border of the geo-fence. However, a radius may also be an inradius or circumradius of a polygon, for instance. In case of a polygonal geo-fence, the geo-fence information typically comprises information on or indicative of one or more line segments (e.g. edges) and/or more points (e.g. corner points or vertices) of the desired geo-fence. Any of the above information may be considered as defining an area covered by the desired geo-fence and a boundary of the desired geo-fence. For instance, the geo-fence information may comprise the coordinates or respective points.

As an example, the geo-fence may have the shape of a circle and the geographic location may be the center point of the circle and the radius may be the radius of the circle at the same time defining the boundary and area of the desired geo-fence. In this case, the geo-fence information may comprise coordinates on the center point and the radius, which would be sufficient to completely define the desired geo-fence.

According to an exemplary embodiment of all aspects of the invention, said obtaining of geo-fence information at least partially defining the desired geo-fence comprises one or more of:
- receiving a user input indicating at least a part of said geo-fence information; and/or
- receiving said geo-fence information or a part thereof over a network.

For instance, a user or operator, responsible for setting up a geo-fence, may input the desired geo-fence information at least partially defining a geo-fence into an apparatus (e.g. a first apparatus performing the method) via a user interface. A user interface may comprise a keyboard, a mouse, a touchscreen, a voice control and/or any other suitable input means. As an example, for defining a circular geo-fence, the operator may input a center point and a radius. In one example, the operator may input the geo-fence information at least partly via a map. The operator may click or point on a position of a displayed map in order to input a geographic location (e.g. as the center point). Alternatively the operator may manually input coordinates of one or more geographic locations for the geo-fence information to be obtained. Particularly in case of a circular geo-fence, the operator may also be required to input a radius. In one example, the operator may also draw a desired geo-fence on a displayed map. Other suitable input means or user interfaces may also be utilized.

The operator may also input the geo-fence information on one apparatus, which may then send the geo-fence information over a network (such as the internet), so that another apparatus obtains the geo-fence information for further use.

According to an exemplary embodiment of all aspects of the invention, the confidence information indicating the desired confidence for triggering the desired geo-fence comprises information on or indicative of one or more of:
- a triggering confidence;
- a probability or probability mass; and/or
- a triggering sensitivity.

A triggering confidence or confidence level (e.g. indicated in % or as "high", "medium", "low") may be understood as or representing the probability that the geo-fence has been triggered, e.g. that the position of the respective asset is within the geo-fence at least with a probability corresponding to the triggering confidence. A probability or probability mass may indicate the probability or probability mass of a location estimate required to lie inside the geo-fence for considering the geo-fence as having been triggered. A triggering sensitivity (e.g. indicated in % or as "high", "medium", "low", for instance) may be considered as a counterpart or inversion of the triggering confidence, i.e. when the confidence is high, the sensitivity is low (having the advantage of a low number of false positives but with a potentially delayed determination of a triggering of a geo-fence), and when the confidence is low, the sensitivity is high (having the advantage of a quick and responsive triggering but potentially with an increased number of false positives).

According to an exemplary embodiment of all aspects of the invention, said obtaining of confidence information indicating the desired confidence for triggering the desired geo-fence comprises one or more of:
- receiving a user input indicating at least a part of said confidence information; and/or
- receiving said confidence information or a part thereof over a network.

For instance, a user or operator, responsible for setting up a geo-fence, may input the desired confidence information into an apparatus (e.g. the first apparatus performing the method) via a user interface. As already mentioned, a user interface may in particular comprise a keyboard, a mouse, a touchscreen, a voice control and/or any other suitable input means. For instance, the operator may input the desired confidence information into an apparatus (e.g. the first apparatus performing the method) via a user interface; As a simple example, the operator may input a confidence, probability or sensitivity value, which may be a quantitative value (e.g. numeric value in the range of [0 ...1] or from 0 to 100%) or a qualitative value (e.g. "high confidence / low sensitivity ", "medium confidence/sensitivity", "low confidence/high sensitivity"). The operator may also select such values from a predefined list. The operator may also use other input means or user interfaces for inputting the desired confidence information.

Similarly to the geo-fence information, the operator may also input the desired confidence information on one apparatus, which may then send the desired confidence information over a network (such as the internet), so that another apparatus obtains the desired confidence information for further use.

According to an exemplary embodiment of all aspects of the invention, said method further comprises:
- obtaining confidence information on an achievable confidence for the desired geo-fence defined by the geo-fence information.

The confidence information on an achievable confidence may also be referred to as "achievable confidence information". The achievable confidence information can advantageously be used for checking whether the desired geo-fence and the desired confidence are incompatible. For instance, the desired geo-fence and the desired confidence may be considered incompatible, in case the desired confidence is larger than the achievable confidence for the desired geo-fence. In one example, the achievable confidence information can be obtained as a pre-calculated value from a database. In another example, the achievable confidence information is determined or calculated, e.g. based on positioning uncertainty information for the area of the desired geo-fence, which will be explained in more detail below.

Generally, an achievable confidence for a geo-fence is understood to be a confidence expected to be achievable when assessing whether the geo-fence has been triggered. The achievable confidence may thus be seen as defining a maximum confidence achievable when assessing whether the geo-fence has been triggered.

The achievable confidence typically depends on various factors. For instance, the achievable confidence may depend on the positioning performance at the location of the respective geo-fence, so that the achievable confidence varies with the location of the geo-fence. Accordingly, the achievable confidence information may be a location-dependent or location-specific information on the achievable confidence. The positioning performance (and in particular the positioning uncertainty) in turn may inter alia depend on the type of positioning technology used or available at this location. The achievable confidence typically also depends on the shape and/or size of geo-fence. A different confidence may be achieved for a differently shaped or sized geo-fence, since the achievable confidence is typically lower the smaller the geo-fence, as the maximum probability mass inside the geo-fence decreases.

Accordingly, a determination of the achievable confidence for triggering a certain geo-fence may in particular be based on the positioning performance at the respective location. The positioning performance in turn may be determined based on actual measurements of the positioning performance at or near respective locations. Alternatively, the positioning performance may be estimated based on a typically expected positioning performance in dependence on a priori information, such as the type of area (e.g. rural or urban area) or available information on the positioning system at respective locations (e.g. the number of available access points at a certain location).

According to an exemplary embodiment of all aspects of the invention, said method further comprises:
- obtaining positioning uncertainty information associated with the area defined by the desired geo-fence; and
- determining, based on the geo-fence information and the positioning uncertainty information, confidence information on an achievable confidence for the desired geo-fence defined by the geo-fence information.

Positioning uncertainty information may comprise or be representative of a measure of the precision of a position estimate, such as the (standard) variation or the variance of a position estimate. For instance, the positioning uncertainty may indicate the position uncertainty by means of the distance root mean square ("DRMS"), twice the distance root mean square ("2DRMS"), the circular error probability ("CEP", "CEP50"), the 68% radius ("CEP68"), the 95% radius ("R95"), a covariance matrix or a 1-sigma uncertainty ellipse, to name of few examples. Positioning uncertainty information may be derived from a database providing location specific positioning uncertainty information. For instance the surface of the earth (or a part thereof) may be divided into cells covering a certain geographic area (e.g. each cell covering 10x10 meters, for instance, or any other suitable size). For each cell, the database may indicate positioning uncertainty information. The positioning uncertainty information for a geo-fence may be derived from the one or more cells which overlap with the area defined by the desired geo-fence. In other words, the positioning uncertainty information associated with the area defined by the desired geo-fence may be determined from positioning uncertainty information associated with one or more positions within this area. Such positioning uncertainty information may be readily available in a positioning database, for instance.

Based on the geo-fence information and the positioning uncertainty information, confidence information on an achievable confidence for the desired geo-fence may be determined.

The determination of the achievable confidence may for instance be realized by determining, for a specific geo-fence, for some or all positions in the area covered by the geo-fence the confidence of the true position lying within the geo-fence in view of the uncertainty for a respective position estimates (i.e. the probability mass of a position estimate distribution lying within the specific geo-fence). The highest achievable confidence can be used as the achievable confidence for this specific geo-fence.

As explained above, the achievable confidence information may be pre-calculated e.g. for different geo-fences (e.g. sizes arid/or shapes) at different locations and stored in a database or, alternatively, the achievable confidence information is calculated specifically for the desired geo-fence when the specific geo-fence information is obtained. In any case, the achievable confidence information can then be used for comparing the desired confidence with the achievable confidence and thus an incompatibility between the desired confidence the desired geo-fence can be determined.

Thus, according to an exemplary embodiment of all aspects of the invention, said method further comprises:
- checking whether the desired geo-fence and the desired confidence are incompatible based on the information on the achievable confidence for the desired geo-fence defined by the geo-fence information.

As already mentioned, an incompatibility between the desired geo-fence and the desired confidence may be assumed when the desired confidence is larger than the achievable confidence for the desired geofence. An incompatibility may, however, also be assumed when the desired confidence is below the achievable confidence, but e.g. still too close (e.g. closer than a predetermined value) to the achievable confidence, as it may still be considered too unlikely to trigger the geo-fence.

In case the utilized positioning technologies for evaluating whether a geo-fence is or has been triggered provide a more-or-less homogenous positioning performance (which may in particular be the case for UWB and Bluetooth based positioning technologies indoors and for GNSS based positioning technologies outdoors), the uncertainty can usually be predicted only based on the position technology. A corresponding countermeasure may then be to not allow setting too small a geo-fence when considering the usually achieved positioning technology performance in view of the required confidence level (as will be explained in more detail below).

However, specifically in view of the various different positioning technologies available nowadays, e.g. when using so called "signal-of-opportunity-based" positioning methods (i.e. positioning methods utilizing signals which are originally not intended or designed for positioning purposes), there is the challenge that the notion of e.g. "too small" can have very different meanings and for instance strongly depend on the specific location. This is because the performance of such positioning technologies can inter alia be strongly location dependent and can for instance be different in rural, sub-urban and urban environments.

The above described approach of determining an incompatibility takes into account such a location dependency of the positioning performance, since a specific geo-fence and the positioning uncertainty information associated with the area defined by this desired geo-fence is considered.

Generally, only if it is determined, based on said checking that the desired geo-fence and the desired confidence are incompatible, a countermeasure in order to resolve the incompatibility is required and performed (or caused to be performed).

If it is, however, determined that the desired geo-fence and the desired confidence are compatible, performing or causing performing a countermeasure in order to resolve the incompatibility is generally not necessary.

According to an exemplary embodiment of all aspects of the invention, an incompatibility of the desired geo-fence and the desired confidence is assumed, in case it is determined that the desired geo-fence cannot be triggered with the desired confidence.

The desired geo-fence may in particular not be triggered with the desired confidence in case the desired confidence for the desired geo-fence is larger than the achievable confidence for the desired geo-fence, as already mentioned.

According to an exemplary embodiment of all aspects of the invention, said countermeasure in order to resolve the incompatibility comprises one or more of:
- providing an output indicating the incompatibility;
- providing an output suggesting changing the desired geo-fence;
- providing an output suggesting changing the desired confidence;
- providing an output suggesting a different, in particular larger geo-fence as the desired geo-fence;
- providing an output suggesting a different, in particular smaller confidence as the desired confidence;
- providing a user output to a user; and/or
- providing visual, acoustic and/or haptic feedback to a user.

The output may be provided via an application interface (e.g. API return code) or via a user interface. The output may be provided to the user or operator, who may have input the geo-fence information and the confidence information. The output may be a visual, acoustic and/or haptic output For instance, the user or operator may receive a notification or pop-up message. The output may indicate the incompatibility. The user may decide how to react. Alternatively, the output suggesting (or force) changing the desired geo-fence or the desired confidence. In one example, the output may suggest a different, in particular larger geo-fence as the desired geo-fence. A larger geo-fence is in particular a geo-fence having or covering a larger geographic area. Additionally or alternatively, the output may suggest a different, in particular a smaller confidence as the desired confidence.

Additionally or alternatively, the desired geo-fence may (automatically) be changed (in particular increased) and/or desired confidence may (automatically) be changed (in particular decreased).

Thus, according to an exemplary embodiment of all aspects of the invention, said countermeasure in order to resolve the incompatibility comprises one or more of:
- automatically setting a different geo-fence as the desired geo-fence compatible with the desired confidence; and/or
- automatically setting a different confidence as the desired confidence compatible with the desired geo-fence.

For instance, the size of the desired geo-fence may be increased (e.g. by increasing the radius of the geo-fence in the example of a circular geo-fence) until the geo-fence is compatible with the desired confidence. Additionally or alternatively, the desired confidence may be decreased until the confidence is compatible with the desired geo-fence.

According to an exemplary embodiment of all aspects of the invention, the method, in response to the countermeasure, further comprises one or more of:
- obtaining further geo-fence information at least partially defining a further geo-fence as the desired geo-fence; and/or
- obtaining further confidence information indicating a further confidence as the desired confidence.

As a result to the countermeasure, further geo-fence information at least partially defining a (new) desired geo-fence and/or further confidence information indicating a (new) desired confidence may be obtained. For instance, the user or operator may input respective further geo-fence information and/or respective further confidence information, e.g. in the same manner as described with respect to the previously obtained geo-fence information and confidence information.

Since it may not be clear if the so obtained desired geo-fence and/or desired confidence are compatible, it may again be checked again whether these (newly defined) desired geo-fence and desired confidence are incompatible, in particular based on the information on the achievable confidence for the desired geo-fence defined by the further geo-fence information, as described above.

Thus, it may repeatedly checked whether the desired geo-fence and the desired confidence are incompatible and if necessary a countermeasure may be performed again in order to resolve the incompatibility.

Preferably, only if no incompatibility is determined between the desired geo-fence and the desired confidence, the desired geo-fence with the desired confidence for triggering the geo-fence is set up or is allowed to be set up. The position of the asset may then be estimated repeatedly and it may be checked repeatedly whether the geo-fence is triggered.

Thus, according to an exemplary embodiment of all aspects of the invention, the method further comprises:
- setting up the desired geo-fence, if the desired geo-fence and the desired confidence are compatible;
- estimating a geographic position of an asset;
- determining, whether the desired geo-fence has been triggered based on the estimated position of the asset and the desired confidence.

Generally, the described approach is advantageous for any kind of asset and positioning technology. For instance, the asset (e.g. a mobile device and in particular an IoT device), the location of which shall be evaluated with respect to the geo-fence, may be part of may be moved by a movable entity, wherein the movable entity may be a vehicle, e.g. a car or a truck or a motorbike or any other suitable vehicle, or a bike or a person that carries the mobile device and may walk around. The asset may be configured to determine its geographic position. As an example, the asset may comprise means for determining the position of the asset, e.g. based on signals received from at least one Global Satellite navigation system satellite (GNSS) system, for example based on signals received from GPS satellites, from BeiDou satellites, from GLONASS satellites or from Galileo satellites or other satellites. As an example, the asset may comprise a GNSS receiver in order to receive signals from the GNSS system such that the asset can estimate its location based on the GNSS signals. Additionally or alternatively, as an example, the asset may comprise a cellular and/or Wifi and/or Bluetooth receiver in order to receive signals from at least one cellular system, and/or from at least one Wifi system and/or from at least one Bluetooth system.

For instance, the means for determining the position may comprise means for estimating the position based on the received GNSS signals, and/or on the received cellular signals, and/or on the received Wifi signals, and/or on the received Bluetooth signals, i.e., in this case the asset may be considered to have own positioning capabilities ("offline positioning"). Thus, the asset may be configured to make measurements of the radio environment, e.g. measurements of the cellular signals and/or of the Wifi signals and/or measurements of the Bluetooth signals which can be used by the mobile device to estimate the position of the asset Additionally or alternatively, for instance, the asset may be configured to make measurements of the radio environment, e.g. measurements of the cellular signals and/or of the Wifi signals and/or measurements of the Bluetooth signals, and may be configured to transmit at least a part of the measurements to a cloud or server, e.g. via a wireless connection, such that the cloud or the server may estimate the asset's position based on the measurements received from the asset. Then, for instance, the cloud or the server may be configured to transmit the estimated position to the asset ("online positioning").

Thus, the position (or location) of the asset can be estimated (or calculated). The position estimation (and the corresponding determining whether the geo-fence has been triggered) may in particularly be performed multiple times, in particular repeatedly (e.g. regularly or irregularly). In this regard, a location update interval associated may be with the asset and may define a frequency indicating how often the position of the asset is estimated in a predefined time period or indicating the time period between two subsequent estimations of the asset. For instance, the location update interval associated with the asset may represent a mean interval between two consecutive location update instants. As a non-limiting example, the location update interval may indicate how frequently the position of the asset is estimated, e.g. in terms of a time interval between two consecutive estimations of the asset. As an example, the location update interval of an asset could be one second, i.e. the time interval is one second which means that the position of the asset is estimated (or calculated) every second. It has to be understood that any other location update interval could be applied to the asset, e.g. every 10^{th} second or every minute, or every five minutes. A short location update interval associated with the asset may lead to increased power consumption of the asset compared to a longer location update interval, and therefore, it may be desired in power-constrained asset (as it is typically the case with loT devices) to prefer or relatively long location update interval, e.g. in the range of several second or even minutes compared to an interval of one second or even less.

The position estimate can then be used to determine whether the geo-fence has been triggered. However, as already explained, the position estimate is associated with a positioning uncertainty with respect to the true position resulting in a corresponding uncertainty whether the geo-fence has actually been triggered. As further explained, in the frame of the present invention, the geo-fence will only be considered as triggered when the desired confidence for triggering the desired geo-fence is met (or exceeded). In the prior art, it may happen that the desired confidence is never or hardly ever met leading to the problem that the geo-fence, as it has been set up, is actually never triggered ("impossible geo-fence"). In contrast, the exemplary aspects of the invention may have the advantage, that such a situation can be safely avoided, since such an incompatibility is detected and a countermeasure in order to resolve the incompatibility is performed, before the geo-fence is set up.

### BRIEF DESCRIPTION OF THE FIGURES

- Fig. 1: is a schematic block diagram of a system comprising an operator device, a server and an asset for performing embodiments of the method according to the invention;
- Fig. 2: is a flow chart illustrating an exemplary embodiment of a method according to the invention;
- Figs. 3a-3c: show example representations of geo-fences according to the invention;
- Fig. 4a, b: show an example user interface for inputting geo-fence information and for providing an output indicating an incompatibility;
- Fig. 5a, 5b: show diagrams for illustrating the effect of the uncertainty of location estimates on the geo-fencing concept;
- Fig. 5c: shows a diagram for illustrating the achievable confidence depending on the geo-fence size and the uncertainty of the position estimate;
- Fig. 6: is a block diagram of an exemplary embodiment of an asset according to the invention; and
- Fig. 7: is a block diagram of an exemplary embodiment of an apparatus according to the invention; and
- Fig. 8: is a schematic illustration of examples of tangible and non-transitory storage media according to the invention.

### DETAILED DESCRIPTION OF THE FIGURES

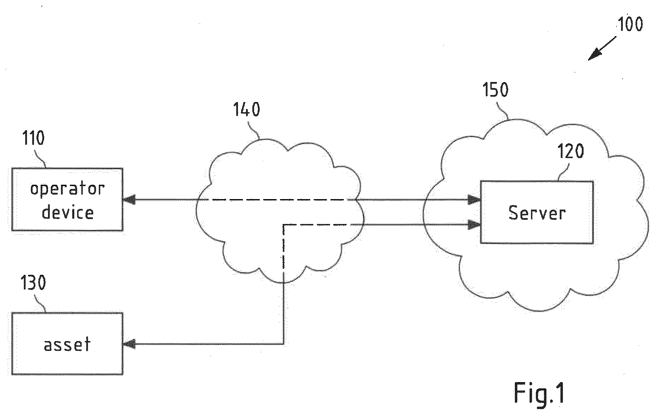

Fig. 1 is a schematic block diagram of an example embodiment of a system 100 comprising a first apparatus, which is in this case an operator device 110, a second apparatus, which is in this case a server 120, a third apparatus, which is in this case an asset 130 (representative of a plurality of assets typically to be managed), and a network 140. Any of the apparatuses 110, 120 and 130 may alone or in combination represent the at least one apparatus for performing exemplary aspects of the invention. In particular, the operator device 110 and the server 120 may together or alone perform exemplary embodiments of the method according to the invention. Server 120 may in particular be considered to comprise distributed servers and be located in an optional cloud 150. The different apparatuses 110; 120,130 may communicate over network 140, which may represent a wireless network, wherein the wireless network may be any network of a cellular network (e.g. 2G, 3G, 4G, 5G or beyond 5G) or a non-cellular network, such as a Wifi network (e.g. based on IEEE 802.11), a Bluetooth network or any other well-suited wireless network.

Operator device 110 may be a client and may be a mobile device for instance. The operator device may be used by an operator for inputting geo-fence information at least partially defining a desired geo-fence and for inputting confidence information indicating a desired confidence for triggering the desired geo-fence. Also, the operator device may be used for performing a countermeasure in order to resolve the incompatibility (such as providing an output indicating the incompatibility). For instance, server 120 may comprise a database or may be connected to a database, such as a database comprising location dependent uncertainty information (e.g. for different cells and/or for different positioning technologies) and/or comprising location dependent achievable confidence information (e.g. for different cells and/or for different positioning technologies). Server 120 may thus in particular be used for checking whether the desired geo-fence and the desired confidence are incompatible. However, generally, all actions performed by server 120 may also be performed by the operator device 110, Asset 130 may be any kind of movable or mobile device, the position of which is monitored with respect to the geo-fence, i.e. asset 130 may trigger the desired geo-fence, once it is set up. The asset may be or may be part of an (e.g. battery powered) IoT device, a mobile computer, a mobile phone, a vehicle, a tracking device or any movable or mobile device, which may in particular be location-aware.

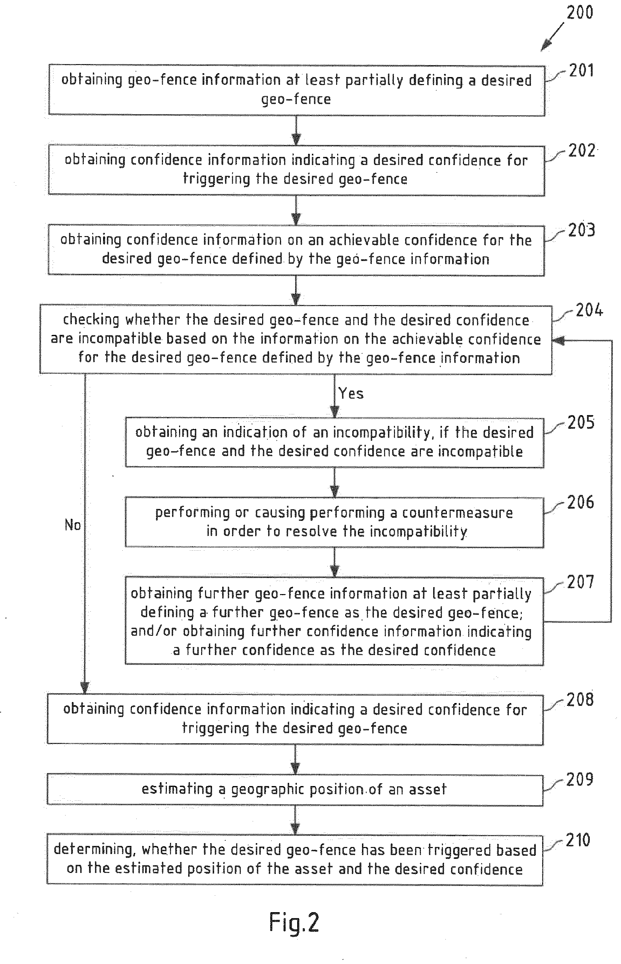

With regard to the flow chart 200 of Fig. 2, an exemplary embodiment of a method according to the invention will be described.

Geo-fence information at least partially defining a desired geo-fence is obtained, action 201, for instance obtained as an input at operator device 110 and/or obtained at server 120 via network 140, wherein such information, in the example of a circular geo-fence information, may e.g. comprise the coordinates of its center point and its radius.

Likewise, confidence information indicating a desired confidence for triggering the desired geo-fence is also obtained, action 202, e.g. as an input at operator device 110 and/or at server 120 via network 140, e.g. indicating high confidence (95%) / low sensitivity, medium confidence (68%) / medium sensitivity, low confidence (50%) / high sensitivity.

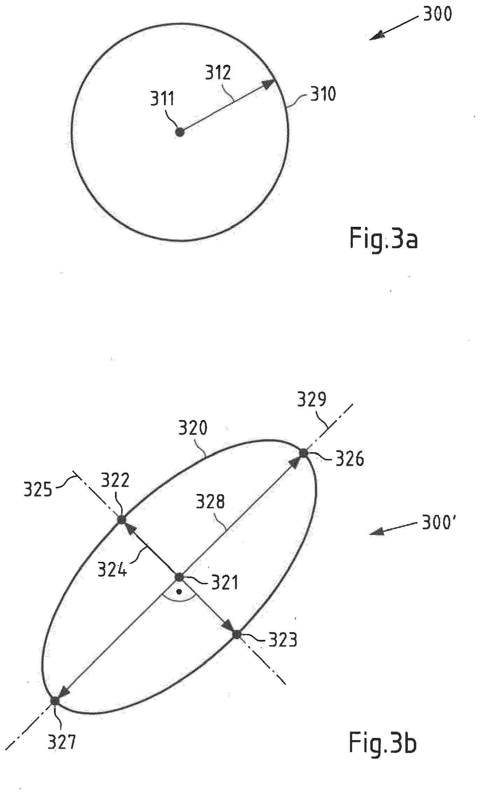

Example representations of geo-fences are illustrated in Fig. 3a - 3c.

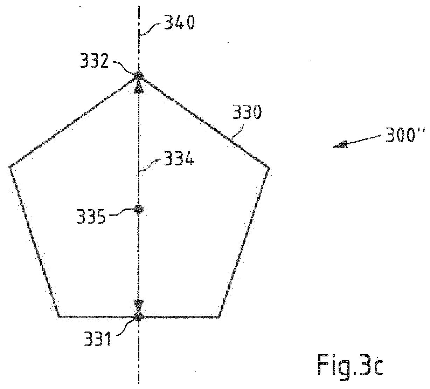

As exemplarily depicted in Fig. 3a, a geo-fence 300 may be defined by a point 311 and a radius 312 such that an area defined by the geo-fence is a circle 310 around the point 311 with radius 312, as exemplarily shown in Fig. 3a. As exemplarily depicted in Fig. 3b, a geo-fence 300' may be defined by an ellipse 320, which may be arranged around a point 321. As a further example and exemplarily depicted in Fig. 3c, a geo-fence 300" may also be defined by a polygon 330 set around an area-of-interest. For instance, said polygon 330 may be a standard polygon which enables the capture of a complex area in the real-word. In Fig. 3c, point 335 may define the center of the area defined by geo-fence 300".

As will be apparent later, it may be useful to determine a representation of the size of the geo-fence for determining the achievable confidence of a geo-fence. As one example, such a size of a geo-fence may be indicative of the whole size of the geo-fence 300, 300', 300". Then, for instance, the size of the geo-fence may be a representative of or correlated to the whole area of the geo-fence. For instance, if the geo-fence is defined by a circle, then the radius, or the diameter or the circumference may be a representative of a size of the geo-fence, or as another example, if the geo-fence is defined by an ellipse or a polygon, the size being the whole size may be defined by the circumference of the ellipse 320 or the polygon 330 or another suitable representative being correlated with the area defined by the ellipse or the polygon.

As another example, such a size of a geo-fence may be indicative of an extension (or length) of the geo-fence in at least one direction (e.g. in exactly one direction). It may be assumed that the extension of the geo-fence goes through a predefined point within the area defined by the geo-fence, wherein this predefined point may represent the center of the area defined by the geo-fence.

In the special case that the geo-fence is defined by a circle, such as exemplarily depicted in Fig. 3a, this extension of the geo-fence in one direction would always be the same irrespective of the orientation of the direction.

However, in case of another shape of the geo-fence, this extension of the geo-fence could vary depending on the direction. E.g. the size may be determined in the direction along axis 325, so that the extension 324 of the geo-fence 300' in this first direction 325 would be between point 322 and point 323 and may go through center 321. Alternatively, the size could be determined in the direction along axis 329, so that the extension 328 of the geo-fence 300' in this second direction 329 would be between point 327 and point 326 and may go through center 321. Or, as another example with respect to Fig. 3c, the size of the geo-fence 300" may be determined along axis 340 such that an extension 334 of the geo-fence 330 in this direction 340 may extend between point 331 and point 3332 and may go through center 335. Any of these directions may be used for determining an example extension of the geo-fence representing a size of the geo-fence. In any case, however, a value representative of the actual area covered by the geo-fence may be always used as an example representation of the size of the geo-fence.

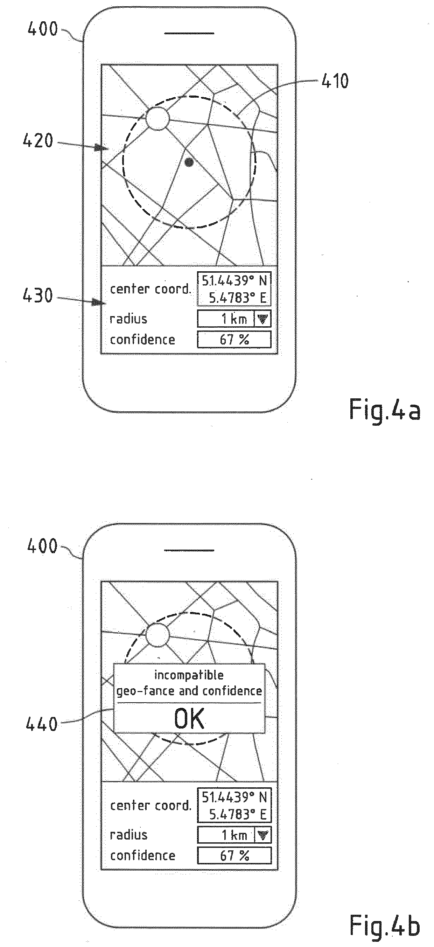

Fig. 4a shows an example user interface of an exemplary mobile operator device 400 for inputting geo-fence information. As shown in Fig. 4a, a user may input geo-fence information defining a desired geo-fence 410 (in this example a circular geo-fence) by graphically inputting a center point and radius on the displayed map 420 in the upper part of the screen. Alternatively, the user may use the input fields 430 on the lower part of the screen for numerically inputting the coordinate of the center point and the radius (in this case 1 km). The user may in this example also use the input fields for inputting confidence information indicating a desired confidence (in this case 67%).

Returning to Fig. 2, confidence information on an achievable confidence for the desired geo-fence defined by the geo-fence information is then obtained, action 203. As an example, positioning uncertainty information associated with the area defined by the desired geo-fence may be obtained, e.g. from a database by server 120, so that, based on the geo-fence information and the positioning uncertainty information, confidence information on an achievable confidence for the desired geo-fence defined by the geo-fence information can be determined or calculated.

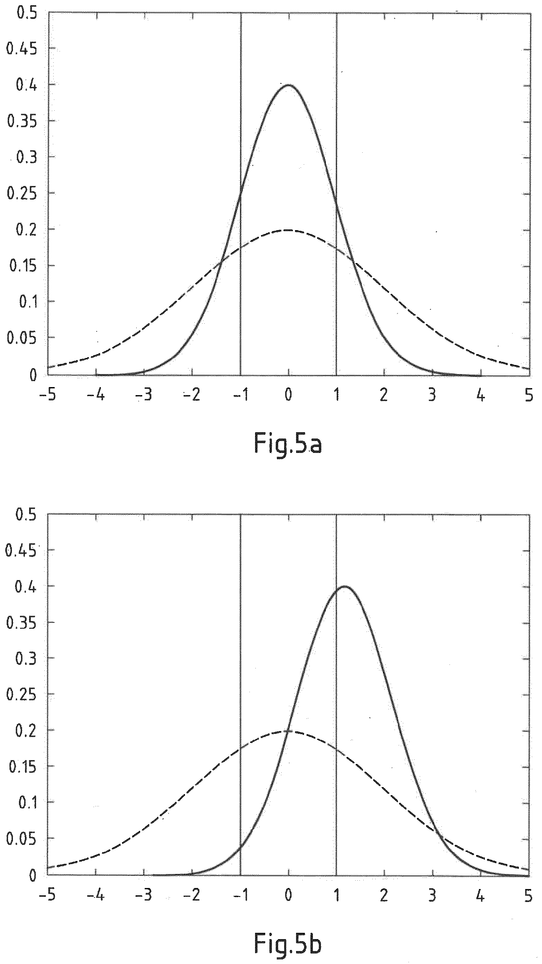

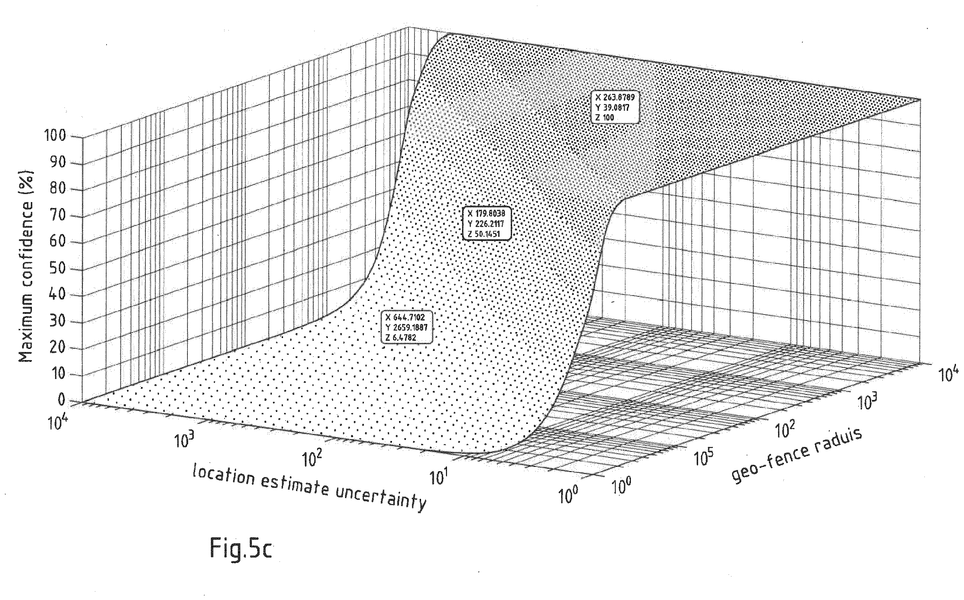

In the following it will be explained in more detail with reference to Figs. 4 and 5 how the determination of an achievable confidence for a certain geo-fence can be realized.

First, it shall be explained in more detail, how the location uncertainty and the geofence size or area relate to the achievable geo-fence triggering confidence. One way to look at this is to understand the achievable geo-fence triggering confidence as being related to the maximum probability mass enclosed by the geo-fence, i.e. the maximum of the location estimate probability density function integral over the geo-fence area.

In Fig. 5a, b the effect of the uncertainty on the geo-fencing concept is illustrated. In the two illustrated cases, the geo-fence is a one-dimensional area in the range [-1,1] for the sake of simplicity and illustration. In addition, in each of the cases there are two location estimates, (solid line and dashed line). In the examples, the location estimate is normally distributed and the best location estimate is taken as the mean of the distribution.

In the case illustrated in Fig. 5a, the means of both, the solid line and the dashed line location estimates are within the exemplary geo-fence (both have the mean of zero). However, the location estimates have different uncertainties (standard deviation of 1 and 2, respectively). Considering the probability of being inside the geo-fence, it turns out that the solid line location estimate is inside with 68% and the dashed line location estimate with 38% probability. Therefore, taking the uncertainty into account shows that the dashed line location estimate is most likely not inside the geo-fence; In contrast, the solid line location estimate is inside more probably than outside.

In the case illustrated in Fig. 5b, the mean of the solid line location estimate is outside the geo-fence, whereas dashed line one is inside. By a traditional approach the dashed line location estimate would trigger the geo-fence, while one indicated by the solid line does not. However, the location estimates have different uncertainties (standard deviation of 1 and 2, respectively). Therefore, considering the probability of being inside the geo-fence, it turns out that the solid line location estimate is inside with 41% and the dashed line location estimate with 38% probability. Therefore, taking the uncertainty into account shows that most likely none of the true locations is inside the geo-fence. Furthermore, although the mean of the solid line location estimate is outside and the mean of the dashed line location estimate is inside the geo-fence boundaries, it turns out that actually the solid line location estimate is inside the geo-fence at higher probability (by a small margin).

The above two examples show that just by considering, if the location is inside the geo-fence, may lead to incorrect conclusion about the situation.

Thus, in order to decide, whether to trigger a geo-fence or not, a desired confidence is set. This desired confidence can be understood as the fraction of the probability mass, which needs to be inside the geo-fence, before the geo-fence is triggered.

To exemplify, if the desire of the operator is to have a low number of false positives, the triggering confidence needs to be correspondingly high. For instance, setting the confidence level to 65% results in above first scenario (Fig. 5a) and the solid line location estimate triggers and the dashed line location estimate does not trigger the geo-fence. If the confidence level was set to e.g. 80%, none of the locations would trigger the geo-fence.

If the desire is to have high sensitivity (geo-fence triggers easily), the desired confidence needs to be set to a correspondingly low level. The drawback of this approach is the increasing number of false positives. For instance, in the above second case (Fig. 5b) setting the confidence level to 40% results in the solid line location estimate to trigger and the dashed line location estimate not to trigger the geo-fence.

Considering uncertainties and setting the confidence level also has consequences to the sizes of the geo-fences that can be triggered. To exemplify, assume that a positioning technology has typically a 10-m CEP68 uncertainty, i.e. the true location is inside a 10-m circle around the estimated location in 68% of the cases. If the desired confidence is set to 50%, this location technology would never be able to trigger smaller than an 8-m radius circular geo-fences (because a 10-m CEP68 means that less than 50% of the probability mass is enclosed by a radius circle smaller than 8m).

However, even if the geo-fence is large enough, there is still the complication that a certain position technology may not be able to reach its best or even its typical accuracy, because even the typical accuracy may often not be achieved in many situations, environments and locations.

Therefore, it is advantageous to not use a typical or standard value for the positioning uncertainty with a certain technology, but to estimate the achievable positioning performance in cells over large areas using the information from positioning databases (e.g. signal-of-opportunity databases, such as Wi-Fi or cellular network radiomap databases) and map data. This provides an understanding, what positioning performance (i.e. accuracy and uncertainty, respectively) is to be expected in each cell.

Now, these two concepts can be combined to model for each cell the maximum achievable triggering confidence for any given geo-fence size. Fig. 5c shows a result of such a calculation. In the diagram of Fig. 5c, the x-axis is the circular geo-fence radius (as an example representation of the size of the geo-fence for the example of a circular geo-fence). As discussed above, other representations of the size of the geo-fence may be used as well. The y-axis in the diagram of Fig. 5c, represents the location estimate uncertainty (in this example in terms of CEP68). The z-axis then represents the maximum triggering confidence achievable given the geo-fence radius and the location uncertainty CEP68.

Fig. 5c shows that when the uncertainty CEP68 is large and the geo-fence radius is small, the maximum achievable confidence is zero (lower left corner of the diagram). In contrast, when the uncertainty CEP68 is small and the geo-fence is large, the maximum achievable confidence can be 100% (upper right corner of the diagram). As illustrated, knowing the potential CEP68 for each small cell for respective parts of the surface earth for e.g. Wi-Fi -based network positioning enables modeling (per each small cell) the achievable confidence as a function of the geo-fence area size (in this example a circle).

Thus, Fig. 5c may be interpreted such that any desired confidence above the curve is a desired confidence above the maximum achievable confidence (and thus leading to an incompatibility between the desired confidence and the desired geo-fence) and any desired confidence (e.g. sufficiently) below the curve is a desired confidence below the maximum achievable confidence (and may thus be allowed during the creation of a geo-fence).

Returning to Fig. 2, the so obtained confidence information on an achievable confidence for the desired geo-fence can now be used for checking whether the desired geo-fence and the desired confidence are incompatible, since it can be checked whether the achievable confidence (determined based on the desired geo-fence) and the desired confidence are compatible or incompatible, action 204. As already explained, an incompatibility may in particular be assumed if the desired confidence is above the achievable confidence.

If the desired geo-fence and the desired confidence are incompatible, an indication of an incompatibility is obtained, action 205.

The system 100 (e.g. operator device 110) can then perform or cause performing a countermeasure in order to resolve this incompatibility. As explained, such a countermeasure in order to resolve the incompatibility may comprise providing an output (e.g. to an API or to the operator), wherein the output may indicate the incompatibility, suggest changing the desired geo-fence, suggest changing the desired confidence, suggest a different, in particular larger geo-fence as the desired geo-fence and/or suggest a different, in particular smaller confidence as the desired confidence. The output may in particular provide visual, acoustic and/or haptic feedback to the operator.

In this regard Fig. 4b illustrates such a countermeasure by providing an output indicating an incompatibility. In this case, a notification 440 is shown on device 400, which has also been used for inputting the geo-fence information and the confidence information. The notification in this case indicates the incompatibility between the desired geo-fence and the desired confidence. After acknowledging the notification, the user may change or may be required to change the geo-fence information and/or the confidence information.

In this way, further geo-fence information at least partially defining a different geo-fence as the desired geo-fence and/or further confidence information indicating a different confidence as the desired confidence will be obtained, action 207.

Additionally or alternatively, the countermeasure may also comprise automatically setting a different geo-fence, which is then considered the desired geo-fence and which is compatible with the desired confidence (for instance automatically changing the size, the shape and/or another characteristic of the geo-fence) and/or automatically setting a different confidence, which is then considered the desired confidence and which is compatible with the desired geo-fence.

However, as it may generally not be the case, that the now provided geo-fence information and/or confidence information result in an compatible combination of geo-fence and desired confidence, it may again be checked, whether there is an incompatibility or not, action 204. This loop may be performed until a desired geo-fence and a desired confidence are obtained, which are considered compatible.

In an exemplary use case, a geo-fence system, which may be by way of example a parcel tracking system, can thus provide feedback, when geo-fences are being created. Assume e.g. that there is a user interface (UI) or an application programming interface (API) that allows setting geo-fences to e.g. tracking devices. Upon receiving the geo-fence information, the system can check the achievable positioning performance in the geo-fence area. Furthermore, since also the desired triggering confidence is obtained, it can be checked if the desired confidence can be achieved. If it turns out that the desired confidence cannot be achieved considering the positioning performance in the geo-fence area and the geo-fence size, the operator can easily be notified about this in the UI or via an API return code.

If the desired geo-fence and the desired confidence are compatible, the desired geo-fence can be set up, action 208. The geo-fence system may then estimate a geographic position of the asset, for which the geo-fence was created, such as asset 130, action 209 and determine, whether the desired geo-fence has been triggered based on the estimated position of the asset and the desired confidence, action 210. This estimation of the geographic position and the determination of a triggering may be performed once or multiple times, in particular repeatedly, for instance regularly or irregularly.

This approach ensures that the operator cannot set "impossible" geo-fences (i.e. geo-fences, which are impossible to trigger or which will hardly ever be triggered). The operator can then react by e.g. increasing the geo-fence size or decreasing the desired confidence. Note that although the example above was given in terms of CEP68, a circular approximation of the uncertainty, and circular geo-fences, the method generalizes to any type of location probability density functions (pdf) and geo-fence shapes. The direct feedback on the "impossible" geo-fences so that the operator can e.g. configure the geo-fence differently.

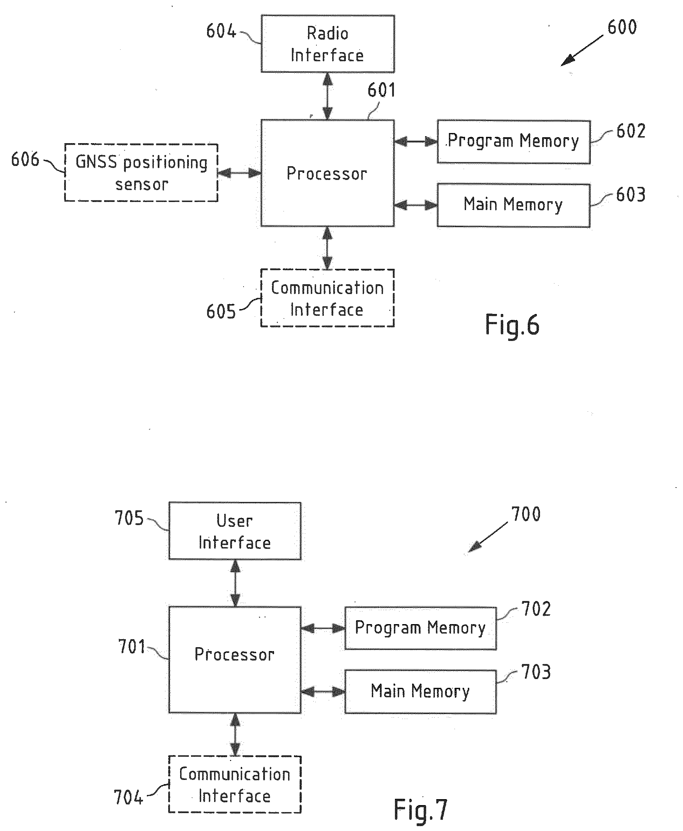

Fig. 6 is a block diagram of an exemplary embodiment of an apparatus in the form of a mobile device 600, which may in particular represent an asset, the position of which shall be monitored. For example, mobile device 600 may be one of a smartphone, a tablet computer, a notebook computer, a smart watch, a *smart band and an IoT device. For instance, mobile device 600 may be considered to be part or at least carried by a vehicle, e.g. a car or a truck or any other well-suited vehicle.

Mobile device 600 comprises a processor 601. Processor 601 may represent a single processor or two or more processors, which are for instance at least partially coupled, for instance via a bus. Processor 601 executes a program code stored in program memory 602 (for instance program code causing mobile device 600 to perform one or more of the embodiments of a method according to the invention or parts thereof, when executed on processor 601), and interfaces with a main memory 603. Program memory 602 may also contain an operating system for processor 601. Some or all of memories 602 and 603 may also be included into processor 601.

One of or both of a main memory and a program memory of a processor (e.g. program memory 602 and main memory 603) could be fixedly connected to the processor (e.g. processor 601) or at least partially removable from the processor, for instance in the form of a memory card or stick.

A program memory (e.g. program memory 602) may for instance be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable from, for instance in the form of a removable SD memory card.

A main memory (e.g. main memory 603) may for instance be a volatile memory. It may for instance be a DRAM memory, to give non-limiting example. It may for instance be used as a working memory for processor 601 when executing an operating system and/or programs.

Processor 601 further controls a radio interface 604 configured to receive and/or output data and/or information. For instance, radio interface 604 may be configured to receive radio signals from a radio node. The radio interface 604 is configured to scan for radio signals that are broadcast by radio nodes, e.g. based an WiFi (WLAN) or a Bluetooth or any other radio communications system. Furthermore, the radio interface 604 may be configured for evaluating (e.g. taking measurements on the received radio signals like measuring a received signal strength) and/or extracting data or information from the received radio signals. It is to be understood that any computer program code based processing required for receiving and/or evaluating radio signals may be stored in an own memory of radio interface 604 and executed by an own processor of radio interface 604 or it may be stored for example in memory 603 and executed for example by processor 601:

For example, the radio interface 604 may at least comprise a BLE and/or Bluetooth radio interface including at least a BLE receiver (RX). The BLE receiver may be a part of a BLE transceiver. It is to be understood that the invention is not limited to BLE or Bluetooth. For example, radio interface 604 may additionally or alternatively comprise a WLAN radio interface including at least a WLAN receiver (RX). The WLAN receiver may also be a part of a WLAN transceiver.

Moreover, for instance, processor 601 may control a further communication interface 605 which is for example configured to communicate according to a cellular communication system like a 2G/3G/4G/5G cellular communication system. Mobile device 600 may use communication interface 605 to communicate with a server, e.g. with server 120 depicted in Fig. 1.

Furthermore, processor 601 may control an optional GNSS positioning sensor 606 (e.g. a GPS sensor or any other GNSS positioning techniques previously mentioned). GNSS positioning sensor may be configured to receive satellite signals of a GNSS system (e.g. GPS satellite signals) and to determine a position of the mobile device (e.g. a current position of the mobile device) at least partially based on satellite signals of the GNSS system that are receivable at this position.

The components 602 to 606 of mobile device 600 may for instance be connected with processor 601 by means of one or more serial and/or parallel busses.

It is to be understood that mobile device 600 may comprise various other components. For example, mobile device 600 may optionally comprise a user interface (e.g. a touch-sensitive display, a keyboard, a touchpad, a display, etc.) or one or more inertial sensors (e.g. an accelerometer, a gyroscope, a magnetometer, a barometer, etc.).

For instance, the mobile device 600 may process a set geo-fence and may track its position in order to provide a notification when the mobile device is within the boundaries of the geofence, i.e. that the geo-fence is triggered.

Fig. 7 is a block diagram of an exemplary embodiment of a an apparatus, such as operator device 110 or server 120 of Fig. 1, which may be an operator device or a server in a positioning support system or any other server, e.g. of an Internet of Things (IoT) cloud.

For instance, apparatus 700 may be used for setting up and/or processing at least one geo-fence (as described with the method of Fig. 2) and/or may track the position of one or more assets (e.g. mobile device 130) in order to send a notification when the asset triggers a geo-fence.

Apparatus 700 comprises a processor 701. Processor 701 may represent a single processor or two or more processors, which are for instance at least partially coupled, for instance via a bus. Processor 701 executes a program code stored in program memory 702 (for instance program code causing apparatus 700 to perform one or more of the embodiments of a method according to the invention or parts thereof (e.g. the method or parts of the method described below with reference to Fig. 2, when executed on processor 701), and interfaces with a main memory 703.

Program memory 702 may also comprise an operating system for processor 701. Some or all of memories 702 and 703 may also be included into processor 701.

Moreover, processor 701 controls a communication interface 704 which is for example configured to communicate according to a cellular communication system like a 2G/3G/4G/5G cellular communication system. Communication interface 704 of apparatus 700 may be provided for communicate between operator device 110 and server 150 in Fig. 1.

Apparatus 700 further comprises a user interface 705 (e.g. a touch-sensitive display, a keyboard, a touchpad, a display, etc.). The user interface 705 may be configured to receive a user input for defining a desired geo-fence and/or a desired confidence, as explained above, in particular with reference to Fig. 2. The user interface 705 may further be configured to provide a user output indicating an incompatibility between the desired geo-fence and the desired confidence, as also explained above, in particular with reference to Fig. 2.

The components 702 to 705 of apparatus 700 may for instance be connected with processor 701 by means of one or more serial and/or parallel busses.

It is to be understood that apparatus 700 may comprise various other components.

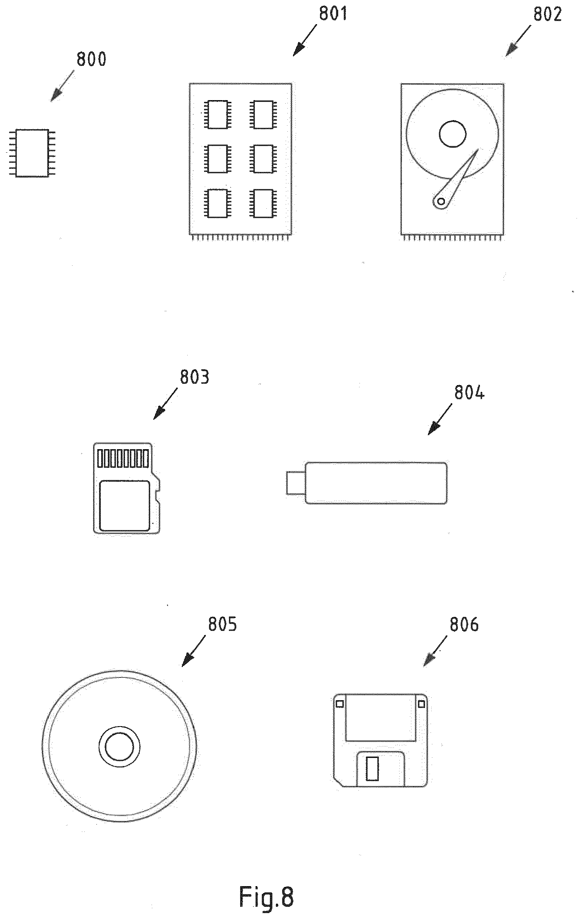

Fig. 8 is a schematic illustration of examples of tangible and non-transitory computer-readable storage media according to the present invention that may for instance be used to implement memory 602 of Fig. 6 or memory 702 of Fig. 7. To this end, Fig. 8 displays a flash memory 800, which may for instance be soldered or bonded to a printed circuit board, a solid-state drive 801 comprising a plurality of memory chips (e.g. Flash memory chips), a magnetic hard drive 802, a Secure Digital (SD) card 803, a Universal Serial Bus (USB) memory stick 804, an optical storage medium 805 (such as for instance a CD-ROM or DVD) and a magnetic storage medium 806.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 601 and 701 of Figs. 6 and 7, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

The following embodiments are also disclosed:
1. A method, performed by at least a first apparatus, the method comprising:
   - obtaining geo-fence information at least partially defining a desired geo-fence;
   - obtaining confidence information indicating a desired confidence for triggering the desired geo-fence;
   - obtaining an indication of an incompatibility, if the desired geo-fence and the desired confidence are incompatible; and
   - performing or causing performing a countermeasure in order to resolve the incompatibility.
2. The method according to embodiment 1, wherein the geo-fence information at least partially defining the desired geo-fence comprises information on or indicative of one or more of:
   - a geographic location of the desired geo-fence;
   - a radius of the desired geo-fence;
   - one or more line segments of the desired geo-fence;
   - one or more points of the desired geo-fence;
   - an area covered by the desired geo-fence; and/or
   - a boundary of the desired geo-fence.
3. The method according to embodiment 1 or 2, wherein said obtaining of geo-fence information at least partially defining the desired geo-fence comprises one or more of:
   - receiving a user input indicating at least a part of said geo-fence information; and/or
   - receiving said geo-fence information or a part thereof over a network.
4. The method according to any of the preceding embodiments, wherein the confidence information indicating the desired confidence for triggering the desired geo-fence comprises information on or indicative of one or more of:
   - a triggering confidence;
   - a probability mass; and/or
   - a triggering sensitivity.
5. The method according to any of the preceding embodiments, wherein said obtaining of confidence information indicating the desired confidence for triggering the desired geo-fence comprises one or more of:
   - receiving a user input indicating at least a part of said confidence information; and/or
   - receiving said confidence information or a part thereof over a network.
6. The method according to any of the preceding embodiments, wherein said method further comprises:
   - obtaining confidence information on an achievable confidence for the desired geo-fence defined by the geo-fence information.
7. The method according to any of the preceding embodiments, wherein said method further comprises:
   - obtaining positioning uncertainty information associated with the area defined by the desired geo-fence; and
   - determining, based on the geo-fence information and the positioning uncertainty information, confidence information on an achievable confidence for the desired geo-fence defined by the geo-fence information.
8. The method according to embodiment 6 or 7, wherein said method further comprises:
   - checking whether the desired geo-fence and the desired confidence are incompatible based on the information on the achievable confidence for the desired geo-fence defined by the geo-fence information.
9. The method according to embodiment 8, wherein an incompatibility of the desired geo-fence and the desired confidence is assumed, in case it is determined that the desired geo-fence cannot be triggered with the desired confidence.
10. The method according to any of the preceding embodiments, wherein said countermeasure in order to resolve the incompatibility comprises one or more of:
   - providing an output indicating the incompatibility;
   - providing an output suggesting changing the desired geo-fence;
   - providing an output suggesting changing the desired confidence;
   - providing an output suggesting a different, in particular larger geo-fence as the desired geo-fence;
   - providing an output suggesting a different, in particular smaller confidence as the desired confidence;
   - providing a user output to a user; and/or
   - providing visual, acoustic and/or haptic feedback to a user.
11. The method according to any of the preceding embodiments, wherein said countermeasure in order to resolve the incompatibility comprises one or more of:
   - automatically setting a different geo-fence as the desired geo-fence compatible with the desired confidence; and/or
   - automatically setting a different confidence as the desired confidence compatible with the desired geo-fence.
12. The method according to any of the preceding embodiments, the method, in response to the countermeasure, further comprising one or more of:
   - obtaining further geo-fence information at least partially defining a further geo-fence as the desired geo-fence; and/or
   - obtaining further confidence information indicating a further confidence as the desired confidence.
13. The method according to any of the preceding embodiments, the method further comprising:
   - setting up the desired geo-fence, if the desired geo-fence and the desired confidence are compatible;
   - estimating a geographic position of an asset;
   - determining, whether the desired geo-fence has been triggered based on the estimated position of the asset and the desired confidence.
14. An apparatus comprising means for performing the method according to any of embodiments 1 to 13.
15. A computer program, the computer program when executed by a processor of an apparatus causing said apparatus to perform the method according to any of embodiments 1 to 13.
16. A system comprising multiple apparatuses, wherein said apparatuses are configured to cooperate for performing the method according to any of embodiments 1 to 13 or one of said apparatuses is configured for performing the method according to any of embodiments 1 to 13 alone.

## Claims

1. A method, performed by at least a first apparatus (110, 120, 130, 400, 600, 700), the method comprising:
- obtaining (201) geo-fence information at least partially defining a desired geo-fence;
- obtaining (202) confidence information indicating a desired confidence for triggering the desired geo-fence;
- obtaining (205) an indication of an incompatibility, if the desired geo-fence and the desired confidence are incompatible; and
- performing or causing performing (206) a countermeasure in order to resolve the incompatibility.

2. The method according to claim 1, wherein the geo-fence information at least partially defining the desired geo-fence comprises information on or indicative of one or more of:
- a geographic location of the desired geo-fence;
- a radius of the desired geo-fence;
- one or more line segments of the desired geo-fence;
- one or more points of the desired geo-fence;
- an area covered by the desired geo-fence; and/or
- a boundary of the desired geo-fence.

3. The method according to claim 1 or 2, wherein said obtaining of geo-fence information at least partially defining the desired geo-fence comprises one or more of:
- receiving a user input indicating at least a part of said geo-fence information; and/or
- receiving said geo-fence information or a part thereof over a network.

4. The method according to any of the preceding claims, wherein the confidence information indicating the desired confidence for triggering the desired geo-fence comprises information on or indicative of one or more of:
- a triggering confidence;
- a probability mass; and/or
- a triggering sensitivity.

5. The method according to any of the preceding claims, wherein said obtaining of confidence information indicating the desired confidence for triggering the desired geo-fence comprises one or more of:
- receiving a user input indicating at least a part of said confidence information; and/or
- receiving said confidence information or a part thereof over a network.

6. The method according to any of the preceding claims, wherein said method further comprises:
- obtaining (203) confidence information on an achievable confidence for the desired geo-fence defined by the geo-fence information.

7. The method according to any of the preceding claims, wherein said method further comprises:
- obtaining positioning uncertainty information associated with the area defined by the desired geo-fence; and
- determining, based on the geo-fence information and the positioning uncertainty information, confidence information on an achievable confidence for the desired geo-fence defined by the geo-fence information.

8. The method according to claim 6 or 7, wherein said method further comprises:
- checking (204) whether the desired geo-fence and the desired confidence are incompatible based on the information on the achievable confidence for the desired geo-fence defined by the geo-fence information.

9. The method according to claim 8, wherein an incompatibility of the desired geo-fence and the desired confidence is assumed, in case it is determined that the desired geo-fence cannot be triggered with the desired confidence.

10. The method according to any of the preceding claims, wherein said countermeasure in order to resolve the incompatibility comprises one or more of:
- providing an output indicating the incompatibility;
- providing an output suggesting changing the desired geo-fence;
- providing an output suggesting changing the desired confidence;
- providing an output suggesting a different, in particular larger geo-fence as the desired geo-fence;
- providing an output suggesting a different, in particular smaller confidence as the desired confidence;
- providing a user output to a user; and/or
- providing visual, acoustic and/or haptic feedback to a user.

11. The method according to any of the preceding claims, wherein said countermeasure in order to resolve the incompatibility comprises one or more of:
- automatically setting a different geo-fence as the desired geo-fence compatible with the desired confidence; and/or
- automatically setting a different confidence as the desired confidence compatible with the desired geo-fence.

12. The method according to any of the preceding claims, the method, in response to the countermeasure, further comprising one or more of:
- obtaining (207) further geo-fence information at least partially defining a further geo-fence as the desired geo-fence; and/or
- obtaining (207) further confidence information indicating a further confidence as the desired confidence.

13. The method according to any of the preceding claims, the method further comprising:
- setting up (208) the desired geo-fence, if the desired geo-fence and the desired confidence are compatible;
- estimating (209) a geographic position of an asset;
- determining (210), whether the desired geo-fence has been triggered based on the estimated position of the asset and the desired confidence.

14. An apparatus (110, 120, 130, 400, 600, 700) comprising means for performing the method according to any of claims 1 to 13.

15. A computer program, the computer program when executed by a processor of an apparatus causing said apparatus to perform the method according to any of claims 1 to 13.

16. A system comprising multiple apparatuses (110, 120, 130,400, 600, 700), wherein said apparatuses are configured to cooperate for performing the method according to any of claims 1 to 13 or one of said apparatuses is configured for performing the method according to any of claims 1 to 13 alone.
